# EUROPEAN PATENT APPLICATION

(11) **EP 4 787 168 A1**
(43) Date of publication of application: **05.08.2026**
(21) Application number: 24869959.7
(22) Date of filing: 05.07.2024
(51) Int. Cl.: G06F 11/30

(54) **METHOD AND APPARATUS FOR MANAGING AND CONTROLLING LOG OUTPUT, ELECTRONIC DEVICE, AND STORAGE MEDIUM**

(30) Priority: 28.09.2023 CN 202311295372
(71) Applicant: Shenzhen TCL Digital Technology Ltd., Shenzhen, Guangdong 518054 (CN)
(72) Inventor: HU, Ke, Shenzhen, Guangdong 518054 (CN); MA, Teng, Shenzhen, Guangdong 518054 (CN); LIU, Yi, Shenzhen, Guangdong 518054 (CN)
(74) Representative: Murgitroyd & Company
(86) International application number: PCT/CN2024/103825
(87) International publication number: WO 2025/066402

(57) **Abstract**

Disclosed in embodiments of the present application is a method for managing and controlling log output, comprising: if a target log generated by a target service process is detected, obtaining a target output level corresponding to the target service process; determining, according to the target output level, state identification information of the target log; and if the state identification information indicates that the target log may be outputted, sending the target log to a target write process, and by means of the target write process, writing the target log into a target buffer. The importance of logs in a buffer is increased.

## Description

This application claims priority to Chinese Application No. 202311295372.7 filed September 28, 2023, and entitle with "METHOD AND APPARATUS FOR MANAGING AND CONTROLLING LOG OUTPUT, ELECTRONIC DEVICE, AND STORAGE MEDIUM", the contents of which are incorporated herein by reference in their entirety.

### FIELD OF THE INVENTION

The embodiments of the present disclosure relate to the field of air conditioning, and in particular, to a method of managing and controlling log output, apparatus, electronic device, and storage medium, where the storage medium comprises a computer-readable storage medium.

### BACKGROUND

A log is an event record generated during the operation of applications and system processes. It records the time and actions of business logic. Logs are not only helpful during the development stage for detecting the operating status of modules, but also serve as an essential means to identify the cause of abnormalities when a system upgrade package is deployed to user devices and problems occur.

### Technical Problem

As the number of processes increases, the number of logs also continues to grow, imposing a burden on log storage. Currently, log storage is controlled based on the size of a buffer space to reduce the amount of log data stored in the buffer. However, this approach tends to miss the storage of critical logs, which is unfavorable for locating problems when an exception occurs.

### Technical solution

The embodiments of the present disclosure provide a method of managing and controlling log output, apparatus, electronic device, and computer-readable storage medium, which can implement control over logs output to a buffer. While reducing the amount of log data required to be buffered, the embodiments can also filter logs and improve the importance of the logs stored in the buffer.

The embodiments of the present disclosure provide a method of managing and controlling log output, comprising:
when a target log generated by a target service process is detected, obtaining a target output level corresponding to the target service process;
determining state identification information of the target log according to the target output level;
when the state identification information indicates that the target log is outputtable, sending the target log to a target writing process, and writing the target log into a target buffer through the target writing process;
wherein the target output level is determined according to a log statistic of the target service process, the log statistic being obtained by counting historical logs generated by the target service process according to a collection duration interval and a collection frequency, and a time interval corresponding to the collection frequency being smaller than the collection duration interval.

Correspondingly, the embodiments of the present disclosure further provide a log output control device, comprising:
a obtaining module configured to, when a target log generated by a target service process is detected, obtain a target output level corresponding to the target service process;
a determining module configured to determine state identification information of the target log according to the target output level;
a controlling module configured to, when the state identification information indicates that the target log is outputtable, send the target log to a target writing process, and write the target log into a target buffer through the target writing process;
wherein the target output level is determined according to a log statistic of the target service process, the log statistic being obtained by counting historical logs generated by the target service process according to a collection duration interval and a collection frequency, and a time interval corresponding to the collection frequency being smaller than the collection duration interval.

Optionally, in some embodiments of the present disclosure, the apparatus further comprises an adjusting module, the adjusting module comprising:
an obtaining unit configured to obtain historical logs generated by the target service process and obtain an initial output level corresponding to the target service process;
a counting unit configured to count the historical logs generated by the target service process according to a collection duration interval and a collection frequency to obtain at least two log statistics; and
an adjusting unit configured to adjust the initial output level according to the at least two log statistics to obtain a target output level.

In some embodiments of the present disclosure, the adjusting unit comprises:
a calculating subunit configured to, for at least two log statistics, calculate a number of log statistics exceeding a statistical threshold to obtain a reference log number; and
a first adjusting subunit configured to increase an initial output level according to the reference log number to obtain a target output level.

In some embodiments of the present disclosure, the adjusting unit comprises:
a determining subunit configured to determine a change trend of log quantity for the at least two log statistics; and
a second adjusting subunit configured to, when the change trend of the log quantity indicates continuous increase, increase the initial output level to obtain the target output level.

In some embodiments of the present disclosure, the counting unit comprises:
a first determining subunit configured to determine a collection time window according to a collection duration interval;
a moving subunit configured to move the collection time window according to a time interval corresponding to a collection frequency to obtain at least two window positions corresponding to the collection time window;
a counting subunit configured to obtain a window statistic of historical logs at each window position through the collection time window; and
a second determining subunit configured to use the window statistic as a log statistic.

In some embodiments of the present disclosure, the moving subunit is specifically configured to:
generate at least two collection time sub-windows corresponding to historical logs according to the time interval corresponding to a collection frequency, wherein the collection time window is formed by at least two adjacent collection time sub-windows;
move the collection time window by a width of one collection time sub-window; and
obtain the window position based on positions of the collection time window before and after the movement.

In some embodiments of the present disclosure, the counting subunit is specifically configured to:
count historical logs according to the collection time sub-window to obtain a log sub-statistic; and
for each window position, perform summation processing on the log sub-statistics of at least two collection time sub-windows corresponding to the collection time window at the window position to obtain a log statistic.

In some embodiments of the present disclosure, the controlling module comprises:
a first controlling unit configured to, when state identification information indicates that a target log is outputtable, obtain a process blacklist to be filtered and a function module blacklist to be filtered; and
a second controlling unit configured to, when a target service process is not in the process blacklist to be filtered and a type of the target log is also not in the function module blacklist to be filtered, send the target log to a target writing process, and write the target log into a target buffer through the target writing process.

In a third aspect, the embodiments of the present disclosure further provide an electronic device, the electronic device comprising a memory, a processor, and a computer program stored in the memory and executable on the processor. When the computer program is executed by the processor, operations of the above-described method of managing and controlling log output are implemented.

In a fourth aspect, the embodiments of the present disclosure further provide a computer-readable storage medium, on which a computer program is stored. When the computer program is executed by a processor, operations of the above-described method of managing and controlling log output are implemented.

In a fifth aspect, the embodiments of the present disclosure further provide a computer program product or a computer program, the computer program product or computer program comprising computer instructions stored in a computer-readable storage medium. When a processor of a computer device reads and executes the computer instructions from the computer-readable storage medium, the computer device performs the method provided in various optional implementations of the embodiments of the present disclosure.

### Advantageous effect

In the embodiments of the present disclosure, when a target log generated by a target service process is detected, a target output level corresponding to the target service process is obtained. State identification information of the target log is determined according to the target output level. When the state identification information indicates that the target log is outputtable, the target log is sent to a target writing process and written into a target buffer through the target writing process.

The target output level is determined according to a log statistic of the target service process, the log statistic being obtained by counting historical logs generated by the target service process according to a collection duration interval and a collection frequency, and a time interval corresponding to the collection frequency being smaller than the collection duration interval.

Through determining the state identification information of the target log based on the target output level corresponding to the target service process, and controlling the output of the target log to the target buffer according to the state identification information, log storage in the buffer can be managed based on levels. Compared with the related technology that controls log storage according to the remaining space of the buffer, the embodiment of the present disclosure can reduce the amount of log data required to be buffered while also filtering logs, thereby improving the importance of logs stored in the buffer.

By obtaining the log statistic of historical logs corresponding to the target service process according to the collection duration interval and the collection frequency, the target output level can be dynamically adjusted based on the log statistic, improving the accuracy of determining the target output level and thus enhancing the accuracy of log output control.

Since the time interval corresponding to the collection frequency is smaller than the collection duration interval, when counting log statistics according to the collection duration interval and the collection frequency, overlapping log contents among adjacent collection duration intervals can be analyzed, thereby enabling refined statistical analysis of historical logs and further improving the accuracy of the target output level.

### BRIEF DESCRIPTION OF THE DRAWINGS

In order to more clearly illustrate the technical solutions in the embodiments of the present disclosure, a brief description of the drawings to be used in the embodiments is provided below. It is apparent that the drawings described below are merely some embodiments of the present disclosure. For those skilled in the art, other drawings can also be obtained based on these drawings without any inventive effort.
FIG. 1 is a diagram of a scenario of a method of managing and controlling log output according to an embodiment of the present disclosure.
FIG. 2 is a flowchart of a method of managing and controlling log output according to an embodiment of the present disclosure.
FIG. 3 illustrates log statistic collection according to an embodiment of the present disclosure.
FIG. 4 illustrates a log storage orientation diagram according to an embodiment of the present disclosure.
FIG. 5 illustrates a storage orientation of an outputtable target log according to an embodiment of the present disclosure.
FIG. 6 illustrates a movement of a collection time window according to an embodiment of the present disclosure.
FIG. 7 illustrates a movement of a collection time window according to another embodiment of the present disclosure.
FIG. 8 illustrates a flowchart of a method of managing and controlling log output according to an embodiment of the present disclosure.
FIG. 9 illustrates a block diagram of a log output control device according to an embodiment of the present disclosure.
FIG. 10 illustrates a block diagram of an electronic device according to an embodiment of the present disclosure.

### DETAILED DESCRIPTION OF THE PRESENT DISCLOSURE

The technical solutions of the present disclosure will be clearly and completely described below in conjunction with the accompanying drawings. It is obvious that the embodiments described are merely a portion of the embodiments of the present invention, rather than all of the embodiments. Based on the embodiments of the present invention, all other embodiments obtained by those skilled in the art without creative efforts shall fall within the protection scope of the present invention.

The embodiments of the present disclosure provide a method of managing and controlling log output, apparatus, electronic device, and computer-readable storage medium. Specifically, the embodiments of the present disclosure provide a log output control device applicable to an electronic device. The terminal device includes, but is not limited to, a television, an automobile, a desktop computer, a notebook computer, a tablet computer, or a mobile phone.

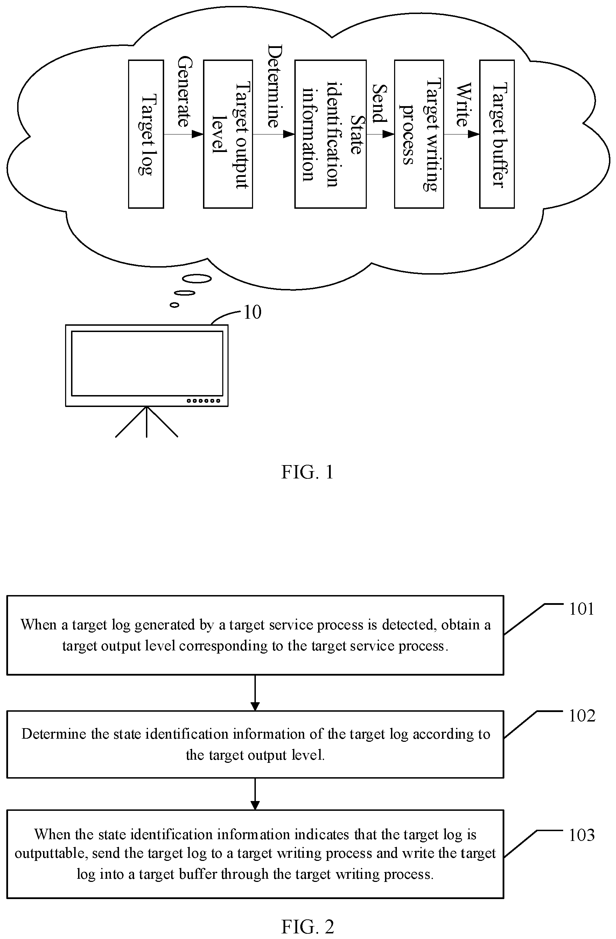

Please refer to FIG. 1, which is a schematic diagram illustrating a scenario in which a terminal device executes the method of managing and controlling log output according to an embodiment of the present disclosure. The specific execution process of the terminal device performing the method of managing and controlling log output is as follows:
After detecting that a target service process has generated a target log, a terminal device 10 obtains a target output level corresponding to the target service process and determines state identification information of the target log according to the target output level. When the state identification information indicates that the target log is outputtable, the target log is sent to a target writing process and written into a target buffer through the target writing process.

It should be noted that the target output level is determined according to a log statistic of the target service process, the log statistic being obtained by counting historical logs generated by the target service process according to a collection duration interval and a collection frequency, and a time interval corresponding to the collection frequency being smaller than the collection duration interval.

It can be understood that in the embodiments of the present disclosure, the state identification information of the target log is determined according to the target output level corresponding to the target service process, and the output of the target log to the target buffer is controlled based on the state identification information. This realizes level-based management of log storage in the buffer. Compared with the related technology that controls log storage based on the remaining space of the buffer, the embodiment of the present disclosure can reduce the amount of log data required to be buffered while also filtering logs, thereby improving the importance of logs stored in the buffer.

By obtaining a log statistic of historical logs corresponding to a target service process according to a collection duration interval and a collection frequency, it becomes convenient to dynamically adjust the output level of a target log based on the log statistic, thereby improving the accuracy of the target output level and further enhancing the accuracy of log output control.

Since the time interval corresponding to the collection frequency is smaller than the collection duration interval, when counting log statistics according to the collection duration interval and the collection frequency, overlapping log contents among adjacent collection duration intervals can be analyzed, enabling refined statistical analysis of historical logs and thus improving the accuracy of the target output level.

The details are described as follows. It should be noted that the order of description of the following embodiments does not limit the priority of the embodiments.

Please refer to FIG. 2 illustrating a flowchart of a method of managing and controlling log output according to an embodiment of the present disclosure.
. The specific flow of the method of managing and controlling log output is as follows:
   Operation 101: When a target log generated by a target service process is detected, obtaining a target output level corresponding to the target service process.

A process refers to an execution activity of a program on a data set in a computer, which serves as a basic unit for system resource allocation and scheduling and forms the foundation of an operating system structure.

It should be noted that a service process refers to a process based on a service type, including application processes and system processes. The service process is different from a target writing process described below. In the embodiments of the present disclosure, the service process refers to any process other than the target writing process. Correspondingly, the target service process is the service process addressed by the embodiments of the present disclosure, i.e., one of the service processes.

A log is an event record generated during the operation of applications or system processes. It records time and business logic actions, and logs can be used to trace and locate problems. Correspondingly, in the embodiments of the present disclosure, the target log refers to a log generated by the target service process after operation.

It should be noted that the target output level is a current output level corresponding to the target service process, which is used to control the output of the target log. For example, when the target output level is higher than a preset reference level, output of the target log is allowed, that is, the target log is allowed to be transmitted and stored in a buffer.

It is emphasized that in the embodiments of the present disclosure, the target output level is a dynamically adjusted level, for example, obtained by adjusting based on the historical log generation situation of the target service process. The dynamically adjusted target output level makes the storage of the target log more flexible and targeted, and by controlling storage based on levels, target logs that do not meet the criteria can be filtered out, thereby improving the accuracy of target log storage.

Correspondingly, historical logs generated by the target service process over a historical period can be counted, and the target output level can be adjusted based on the statistical results. For example, an initial output level can be adjusted according to the statistical results to obtain a target output level.

When counting the historical logs, collection can be performed based on a collection duration interval to obtain multiple log statistics. The initial output level can then be adjusted based on the magnitude of the log statistics. The collection duration interval corresponds to a collection range. For example, collection can be performed at fixed time intervals. When the collection duration interval is 10 seconds, then each collection covers log statistics within a 10-second period. The log statistics include a statistic of log line numbers and a statistic of log byte numbers.

Correspondingly, in order to improve the accuracy of adjusting the initial output level, more log statistics can be obtained by controlling the collection frequency of the log statistics. For example, when counting the historical logs using a fixed collection duration interval, the collection frequency can be used to control how frequently the logs are collected, thereby achieving refined statistics of the historical logs. For instance, the collection frequency may be set to collect once every two seconds, meaning that every two seconds, log statistics for a 10-second duration are collected.

That is, optionally, in some embodiments of the present disclosure, the target output level is determined according to a log statistic of the target service process, the log statistic being obtained by counting historical logs generated by the target service process according to a collection duration interval and a collection frequency, and a time interval corresponding to the collection frequency being smaller than the collection duration interval.

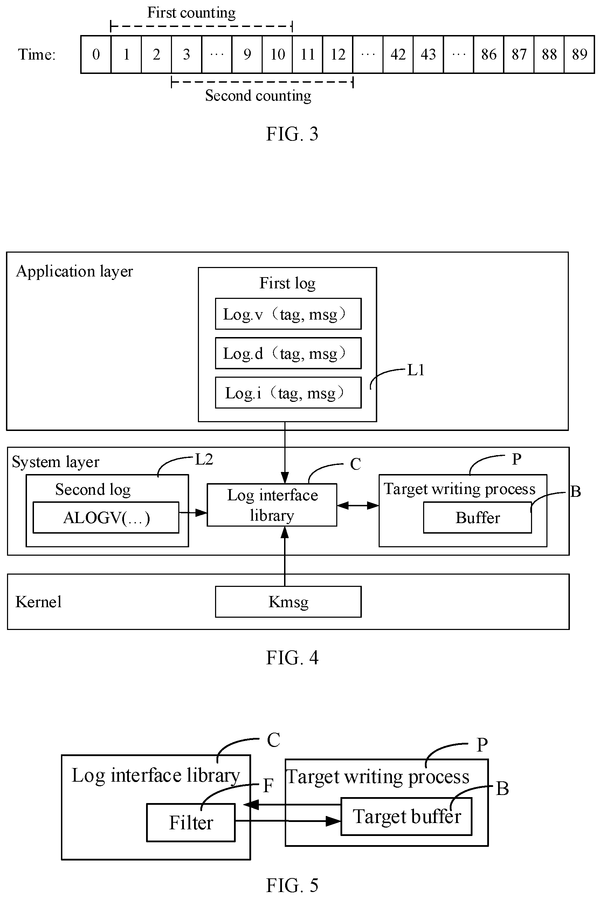

By controlling the collection frequency, the collection frequency determines how often the logs are sampled, making adjacent log statistics include partially overlapping historical logs. For example, please refer to FIG. 3 illustrating log statistic collection according to an embodiment of the present disclosure. At an initial moment, during the first count, historical logs within a 10-second range are counted to obtain the log workload within the range of 1-10 seconds. During the second count, historical logs within the range of 3-12 seconds are counted to obtain the log workload within that 10-second period. Since both the first and second counts involve the collection of historical logs within the range of 3-10 seconds, the time span of the log workload statistics is reduced, thereby facilitating refined statistical analysis of historical logs.

Operation 102: Determining state identification information of the target log according to the target output level.

It should be noted that the state identification information is a result of filtering and analyzing the target log based on the target output level, and is used to indicate an output state of the target log. The output state includes two types: outputtable *and* non-outputtable*.*

For example, when an actual output level of the target service process is higher than or equal to the target output level, outputtable is set as the state identification information corresponding to the target log. Conversely, when the actual output level of the target service process is lower than the target output level, non-outputtable is set as the state identification information corresponding to the target log. The actual output level corresponding to the target service process is configured based on attributes of the target service process, which include a type of service process (such as a system process or an application process) or a type of functional module corresponding to a process initiator. That is, the actual output level of the target service process is determined according to the process type of the target service process or a functional module that starts the service process. The actual output levels corresponding to different types of functional modules or service processes can be predefined as needed. The specific method and value for determining the actual output level of the target service process are not limited herein.

By determining the state identification information corresponding to the target log, the output of the target log can be conveniently controlled based on the state identification information, thereby realizing control of storage of the target log in the buffer.

Operation 103: When the state identification information indicates that the target log is outputtable, the target log is sent to a target writing process, and the target log is written into a target buffer through the target writing process.

It should be noted that the target writing process is specifically used for processing log caching. The target writing process (also called the *logd* process) is a daemon process in the system that acts as a central manager responsible for log printing and serves as the core process for log reading and writing. The target writing process receives outputtable target logs and writes them into the target buffer.

In the embodiments of the present disclosure, the buffer refers to a log buffer that stores logs. The buffer can store various logs generated by application processes or system processes after execution. For example, please refer to FIG. 4, which is a log storage orientation diagram in the related art according to an embodiment of the present disclosure. The diagram shows that both a first log L1 of an application layer (App + Framework layer) and a second log L2 of a system layer (Native + HAL layer) can be sent to a target writing process (logd process) P through a log interface library (liblog.so) C, and written into a buffer (log buffer) B through the target writing process P.

The first log L1 can be obtained by calling interfaces such as Log.v(tag, msg), Log.d(tag, msg), Log.i(tag, msg), Log.w(tag, msg), and Log.e(tag, msg). The second log L2 can be obtained by calling interfaces such as ALOGV(...), ALOGD(...), ALOGI(...), ALOGW(...), and ALOGE(...). Correspondingly, the interfaces for both the first log L1 and the second log L2 call the log interface library (liblog.so), and through this library, the first log L1 and the second log L2 are transmitted to the target writing process (logd process) P via a socket connection.

The target buffer is one of the buffers described above. In the embodiments of the present disclosure, the target buffer refers to a buffer used to store outputtable target logs. For example, please refer to FIG. 5, which is a storage orientation diagram of outputtable target logs according to an embodiment of the present disclosure. As shown in the figure, for target logs whose state identification information indicates that they are outputtable, the logs are sent to a target writing process (logd process) P through a log interface library (liblog.so) C and are written into a buffer (log buffer) B through the target writing process P.

It should be noted that, as shown in FIG. 5, the operations of detecting generation of the target log, obtaining a target output level of the target service process, and determining the state identification information of the target log can be understood as being executed by a corresponding filter F. That is, a filter F is configured in the log interface library (liblog.so), and by executing the filter F, storage control over the target log generated by the target service process can be implemented, i.e., whether to send the target log to the target writing process (logd process) can be controlled.

In summary, in the embodiments of the present disclosure, the state identification information of the target log is determined according to the target output level corresponding to the target service process, and the output of the target log to the target buffer is controlled according to the state identification information. This achieves level-based management of log storage in the buffer. Compared with the related technology in which log storage is controlled based on the remaining space of the buffer, the embodiments of the present disclosure can reduce the amount of log data that needs to be buffered while also filtering logs, thereby improving the importance of logs stored in the buffer.

By obtaining a log statistic of historical logs corresponding to the target service process according to a collection duration interval and a collection frequency, the output level of the target log can be dynamically adjusted based on the log statistic, thereby improving the accuracy of the target output level and further enhancing the accuracy of log output control.

Since the time interval corresponding to the collection frequency is smaller than the collection duration interval, when counting log statistics according to the collection duration interval and the collection frequency, overlapping log contents among adjacent collection duration intervals can be analyzed, enabling refined statistical analysis of historical logs and further improving the accuracy of the target output level.

Correspondingly, in the embodiments of the present disclosure, before obtaining the target output level of the target service process, it is necessary to complete a dynamic adjustment of the target output level. That is, it must be ensured that the obtained target output level is a dynamically adjusted output level. Specifically, in some optional embodiments of the present disclosure, before the operation of "obtaining a target output level corresponding to the target service process," the method further comprises:
obtaining historical logs generated by the target service process and obtaining an initial output level corresponding to the target service process;
counting the historical logs generated by the target service process according to a collection duration interval and a collection frequency to obtain at least two log statistics; and
adjusting the initial output level according to the at least two log statistics to obtain the target output level.

It should be noted that the collection duration interval corresponds to a time-length range. For example, the collection duration interval may be 10 seconds, which means that the collection duration interval is used to count or collect historical logs within a 10-second period.

It should also be noted that the collection frequency is used to control the frequency of collection. For example, when the collection frequency is once every two seconds, it means that collection of historical logs within the collection duration interval is performed every two seconds. Correspondingly, the time interval corresponding to the collection frequency is two seconds.

It can be understood that the log statistic reflects not only the amount of log data but also the frequency at which the target service process generates logs. For example, when the log statistic is greater than zero, it is considered that the target service process has generated logs; otherwise, it has not generated any logs. By counting the occurrences of log generation and non-generation, the frequency at which the target service process generates logs can be obtained.

The initial output level is an original default output level. The initial output level can be obtained based on a unified configuration for all service processes in the terminal, that is, by configuring a global output level for all service processes. For each service process, the global output level serves as the initial output level of that service process.

By adjusting the initial output level based on the log statistic to obtain the target output level, the accuracy of the target output level is improved.

Optionally, the collection duration interval may correspond to a collection time window, and historical logs may be collected based on the collection time window. That is, in some optional embodiments of the present disclosure, the operation of "counting the historical logs generated by the target service process according to the collection duration interval and the collection frequency to obtain at least two log statistics" comprises:
determining a collection time window according to the collection duration interval;
moving the collection time window according to a time interval corresponding to the collection frequency to obtain at least two window positions corresponding to the collection time window;
obtaining a window statistic of the historical logs at each window position through the collection time window; and
using the window statistic as the log statistic.

It should be noted that the collection time window is a window having a time width, and the time width corresponds to the width of the collection duration interval, that is, the collection time window has the same width as the collection duration interval.

The collection frequency can be understood as the movement frequency of the collection time window, meaning that each time the collection time window moves once, historical logs within a corresponding position and a certain duration interval are counted. For example, when the collection frequency is once every two seconds, the collection time window moves by a time width of two seconds each time.

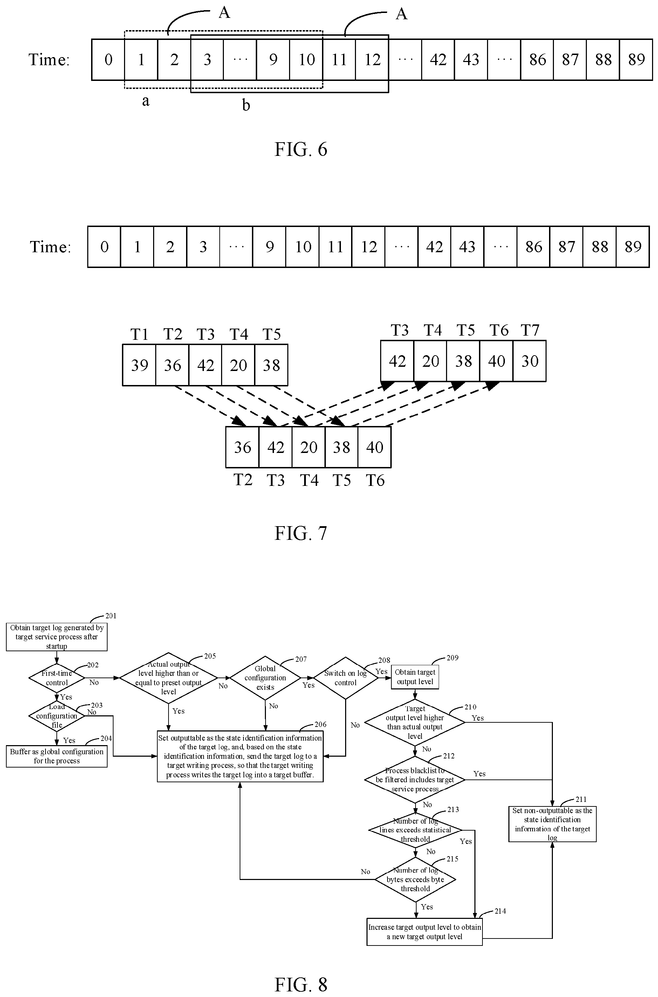

For example, please refer to FIG. 6, which is a schematic diagram of movement of a collection time window according to an embodiment of the present disclosure. As shown in the figure, the collection time window is gradually moved according to a time interval. For instance, a collection time window A moves from a first window position *a* to a second window position *b*, where the distance between the first window position *a* and the second window position *b* corresponds to the time interval. Log statistics are obtained by counting the data at each position to which the collection time window moves. The collection frequency controls the movement speed of the collection time window, that is, it controls the frequency of collecting log statistics, thereby facilitating refined statistical analysis of historical logs.

Optionally, in the embodiments of the present disclosure, multiple collection time sub-windows corresponding to historical logs can be generated according to the time interval corresponding to the collection frequency, and these collection time sub-windows can be combined to form the collection time window. Correspondingly, the collection time window can be moved based on the collection time sub-windows. That is, in some optional embodiments of the present disclosure, the operation of "moving the collection time window according to the time interval corresponding to the collection frequency to obtain at least two window positions corresponding to the collection time window" comprises:
generating at least two collection time sub-windows corresponding to the historical logs according to the time interval corresponding to the collection frequency, where the collection time window is formed by at least two adjacent collection time sub-windows;
moving the collection time window by a width of one collection time sub-window; and
obtaining the window position based on positions of the collection time window before and after the movement.

It can be understood that the time width corresponding to each collection time sub-window is the same as the time interval corresponding to the collection frequency.

The movement of the collection time window by the width of one collection time sub-window can be understood as performing the movement by sequentially adding and deleting collection time sub-windows. For example, please refer to FIG. 7 illustrating another schematic diagram of movement of a collection time window according to an embodiment of the present disclosure. As shown in the figure, the collection time window is composed of multiple collection time sub-windows. The collection time sub-window located at the rightmost side is taken as a first window, and the one at the leftmost side is taken as a second window. The movement of the collection time window is realized by adding one collection time sub-window to the right side of the first window and deleting the second window.

For example, in FIG. 7, the collection time window is composed of five collection time sub-windows (T1-T5). The collection duration interval corresponding to the collection time window is 10 seconds, and the time interval corresponding to each collection time sub-window is 2 seconds. Accordingly, the movement of the collection time window can be realized by deleting the collection time sub-window T1 from the collection time window and adding a new collection time sub-window T6.

Since the collection time window is composed of multiple collection time sub-windows, the log statistic can be obtained by calculating the sum of log sub-statistics corresponding to each collection time sub-window. That is, in some optional embodiments of the present disclosure, the operation of "obtaining a log statistic of the historical logs at each window position through the collection time window" comprises:
counting the historical logs according to the collection time sub-window to obtain a log sub-statistic; and
for each window position, performing summation processing on the log sub-statistics of at least two collection time sub-windows corresponding to the collection time window at that window position to obtain the log statistic.

By summing the respective log sub-statistics, the log statistic is obtained. In the embodiments of the present disclosure, each collection time sub-window also corresponds to a time width, for example, a duration of 2 seconds. Accordingly, the log sub-statistic can be obtained by counting the amount of logs within the 2-second period.

In the embodiments of the present disclosure, the log sub-statistic can be obtained by counting the number of lines (Lines) and the number of bytes (Bytes) of the logs.

Optionally, as the target service process continuously operates and generates target logs, new target logs will keep being produced. For the next generated target log, a further dynamic adjustment can be performed based on the current dynamically adjusted target output level, and the next generated target log can be controlled for output storage based on another output level obtained after the further dynamic adjustment. The re-adjustment of the current dynamically adjusted target output level can be implemented as follows:
obtaining a first time starting point of the collection time window when the target output level is determined, where the time ending point of the collection time window at that time corresponds to the moment when the target log is detected;
determining a target time starting point according to a movement step size and the first time starting point;
using the target time starting point as a new starting point of the collection time window to collect historical logs, so as to obtain a new log statistic;
when the log statistic exceeds a statistical threshold, increasing the current dynamically adjusted target output level to obtain another output level; and
performing output control on the next generated target log based on the other output level.

In this embodiment, "output control" refers to determining new state identification information and, based on the new state identification information, determining whether to send the next generated target log to the target writing process.

That is, in the embodiments of the present disclosure, when a new target log is generated, a new output level can be obtained by further adjusting the previously determined target output level.

Optionally, in the embodiments of the present disclosure, whether to adjust the initial output level can be determined based on whether the log statistic exceeds a statistical threshold. Specifically, in some optional embodiments of the present disclosure, the operation of "adjusting the initial output level according to the at least two log statistics to obtain the target output level" comprises:
calculating the number of log statistics exceeding the statistical threshold for the at least two log statistics to obtain a reference log count; and
increasing the initial output level according to the reference log count to obtain the target output level.

By counting the number of log statistics that exceed the statistical threshold, a reference log count is obtained. The reference log count is used to adjust the initial output level. For example, each time the statistical threshold is exceeded, the initial output level can be raised by one level, that is, the initial output level is increased upward by the number of reference log counts.

Optionally, in the embodiments of the present disclosure, in order to improve the accuracy of the target output level, the initial output level can also be adjusted based on the change trend of the log statistics. Specifically, in some optional embodiments of the present disclosure, the operation of "adjusting the initial output level according to the at least two log statistics to obtain the target output level" comprises:
determining a change trend of the log amount corresponding to the at least two log statistics; and
when the change trend of the log amount indicates a continuous increase, increasing the initial output level to obtain the target output level.

It can be understood that the change trend of the log amount reflects the variation pattern of the log statistics, such as an upward trend, a downward trend, a continuous increase, a continuous decrease, an increase followed by a decrease, or a decrease followed by an increase. Correspondingly, the adjustment amplitude of the initial output level can be configured for different log amount change trends. For example, the level can be raised by zero, one, or two levels, or lowered by zero, one, or two levels, and so on. Adjusting the target output level according to the change trend of the log amount further enhances the accuracy of the target output level.

Optionally, in the embodiments of the present disclosure, a blacklist can also be configured to filter logs, thereby improving the comprehensiveness of log control. Specifically, in some optional embodiments of the present disclosure, the operation of "when the state identification information indicates that the target log is outputtable, sending the target log to the target writing process, and writing the target log into the target buffer through the target writing process" comprises:
when the state identification information indicates that the target log is outputtable, obtaining a process blacklist to be filtered and a functional module blacklist to be filtered; and
when the target service process is not included in the process blacklist to be filtered and the type of the target log is also not included in the functional module blacklist to be filtered, sending the target log to the target writing process and writing the target log into the target buffer through the target writing process.

In the embodiments of the present disclosure, the process blacklist to be filtered records process types to be filtered, and the functional module blacklist to be filtered records functional modules to be filtered. Through these blacklists, comprehensive filtering of logs is achieved. By maintaining the process blacklist and the functional module blacklist to be filtered, accurate control over target logs generated by target service processes can be realized.

In the embodiments of the present disclosure, whether the target service process is included in the process blacklist to be filtered can be determined according to whether an identifier corresponding to the target service process is included in the blacklist.

The functional module refers to a functional module corresponding to the target service process, such as a music or video module. Correspondingly, different functional modules correspond to different classes. A class is a reflection of an entity in the real or conceptual world within a computer, encapsulating data and operations performed on the data into a single body (e.g., class ClassName {}). Accordingly, the class name can be used to configure the functional module blacklist to be filtered. Then, whether the class name corresponding to the target service process is included in the functional module blacklist can be used to control the log output.

In summary, in the embodiments of the present disclosure, by moving the collection time window according to the time interval corresponding to the collection frequency and collecting historical logs through the moved collection time window, collection or counting of historical logs is realized based on the collection frequency and collection duration interval. Through calculating the number of reference logs whose log statistics exceed a statistical threshold and determining the trend of log amount variation, adjustment of the initial output level based on the reference log count and log variation trend is achieved, thereby obtaining the target output level and improving its accuracy.

By configuring a process blacklist and a functional module blacklist to be filtered, output control of target logs is realized based on the blacklists, enhancing the comprehensiveness of log management.

In the process of managing the target log based on the target output level, the process blacklist to be filtered, and the functional module blacklist to be filtered, a corresponding sequence can be configured. The output condition of the target log is determined in order according to this sequence. For example, please refer to FIG. 8, which is another flowchart of the method of managing and controlling log output according to an embodiment of the present disclosure. The specific process of the method of managing and controlling log output includes operations 201-215.

Operation 201: Obtain a target log generated by a target service process after it is started.

Operation 202: Determine whether it is the first time of control. When yes, proceed to operation 203; otherwise, proceed to operation 205.

Operation 203: Determine whether a configuration file has been loaded. When yes, proceed to operation 204; otherwise, proceed to operation 206.

After the configuration file is loaded, configuration information is obtained. The configuration information includes an initial output level for global service processes, a process blacklist to be filtered, and a functional module blacklist to be filtered.

Operation 204: Buffer the global configuration for the process.

That is, initially, the target log of the target service process needs to satisfy the initial output level, the process blacklist to be filtered, and the functional module blacklist to be filtered.

Operation 205: Determine whether an actual output level of the target service process is higher than or equal to a preset output level. When the actual output level of the target service process is higher than or equal to a preset output level, proceed to operation 206; otherwise, proceed to operation 207.

The actual output level is determined based on attributes of the target service process. The preset output level is a predefined level, and in the embodiments of the present disclosure, meeting the preset output level indicates that the target log is of high importance.

Operation 206: Set "outputtable" as the state identification information of the target log, and based on the state identification information, send the target log to a target writing process, so that the target writing process writes the target log into a target buffer.

Operation 207: Determine whether a global configuration exists. When the global configuration does not exist, proceed to operation 206; when the global configuration exists, proceed to operation 208.

Operation 208: Determine whether a log control switch is turned on. When a log control switch is turned off, proceed to operation 206; when the log control switch is turned on, proceed to operation 209.

Operation 209: Obtain the target output level, which is derived based on statistical analysis of historical logs generated by the target service process.

Operation 210: Determine whether the target output level is higher than the actual output level. When the target output level is higher than the actual output level, proceed to operation 211; when the target output level is not higher than the actual output level, proceed to operation 212.

Operation 211: Set "non-outputtable" as the state identification information corresponding to the target log.

Operation 212: Determine whether the process blacklist to be filtered includes the target service process. When the process blacklist to be filtered includes the target service process, proceed to operation 211; otherwise, proceed to operation 213.

Operation 213: Determine whether the number of log lines exceeds a statistical threshold. When the number of log lines exceeds the statistical threshold, proceed to operation 214; otherwise, proceed to operation 215.

The number of log lines refers to the number of logs generated by the target service process within a certain time interval, for example, the number of log lines generated within 10 seconds.

Operation 214: Increase the target output level to obtain a new target output level.

Operation 215: Determine whether the number of log bytes exceeds a byte threshold. When the number of log bytes exceeds a byte threshold, proceed to operation 214; otherwise, proceed to operation 206.

The number of log bytes refers to the amount of log data generated by the target service process within a certain time interval, for example, the number of bytes of logs generated within 10 seconds.

It can be understood that by loading the configuration file during the first control operation and obtaining the global configuration, log management for each service process can be realized. That is, the logs generated by each service process must comply with the global configuration during storage.

The preset output level corresponds to the level associated with highly important logs. By comparing the actual output level with the preset output level, it can be determined whether a target log is of high importance. When it is determined to be highly important, it can be directly stored in the buffer. When the target log is determined not to be highly important, subsequent judgments can be performed to determine whether the target log is of moderate or low importance, thereby achieving filtering and screening of target logs.

The log control switch corresponds to a switch state, indicating whether comparison operations involving the target output level, the number of log lines, and the number of log bytes are to be performed. When the switch is in the *off* state, the target log is sent directly to the target writing process for caching according to a traditional process.

When the log control switch is *on*, the comparison of the target output level, the number of log lines, and the number of bytes enables dynamic adjustment of the target output level.

To facilitate better implementation of the method of managing and controlling log output of the present disclosure, the present disclosure also provides a log output control device based on the above-described method of managing and controlling log output. The meanings of the terms used herein are the same as those in the method of managing and controlling log output described above, and specific implementation details can be found in the explanations provided in the method embodiments.

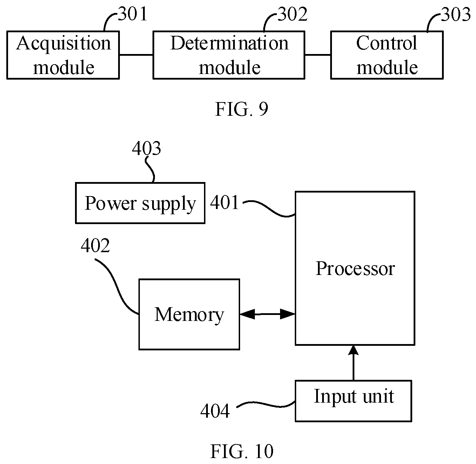

Please refer to FIG. 9 illustrating a block diagram of a log output control device according to an embodiment of the present disclosure. The log output control device includes an acquisition module 301, a determination module 302, and a control module 303.

The acquisition module 301 is configured to obtain a target output level corresponding to a target service process when it is detected that the target service process has generated a target log.

The determination module 302 is configured to determine state identification information of the target log according to the target output level.

The control module 303 is configured to, when the state identification information indicates that the target log is outputtable, send the target log to a target writing process and write the target log into a target buffer through the target writing process.

The target output level is determined according to a log statistic of the target service process. The log statistic is obtained by counting historical logs generated by the target service process according to a collection duration interval and a collection frequency, and the time interval corresponding to the collection frequency is smaller than the collection duration interval.

Optionally, in some embodiments of the present disclosure, the apparatus further includes an adjustment module, which includes an acquisition unit, a statistical unit, and an adjustment unit.

The acquisition unit is configured to acquire historical logs generated by the target service process and acquire an initial output level corresponding to the target service process.

The statistical unit is configured to count the historical logs generated by the target service process according to the collection duration interval and the collection frequency to obtain at least two log statistics.

The adjustment unit is configured to adjust the initial output level according to the at least two log statistics to obtain the target output level.

In some embodiments of the present disclosure, the adjustment unit includes a calculation subunit and a first adjustment subunit.

The calculation subunit is configured to calculate, for the at least two log statistics, the number of log statistics exceeding a statistical threshold to obtain a reference log count.

The first adjustment subunit is configured to increase the initial output level according to the reference log count to obtain the target output level.

In some embodiments of the present disclosure, the adjustment unit includes a determination subunit and a second adjustment subunit.

The determination subunit is configured to determine a change trend of the log amount corresponding to the at least two log statistics.

The second adjustment subunit is configured to increase the initial output level to obtain the target output level in response to a continuous rise of a change trend of the log amount.

In some embodiments of the present disclosure, the statistical unit includes a first determination subunit, a movement subunit, a statistical subunit, and a second determination subunit.

The first determination subunit is configured to determine a collection time window according to the collection duration interval.

The movement subunit is configured to move the collection time window according to a time interval corresponding to the collection frequency to obtain at least two window positions corresponding to the collection time window.

The statistical subunit is configured to obtain a window statistic of historical logs at each window position through the collection time window.

The second determination subunit is configured to use the window statistic as the log statistic.

In some embodiments of the present disclosure, the movement subunit is specifically configured to:
generate at least two collection time sub-windows corresponding to the historical logs according to the time interval corresponding to the collection frequency, where the collection time window is composed of at least two adjacent collection time sub-windows;
move the collection time window by a width of one collection time sub-window; and
obtain the window position based on the positions of the collection time window before and after the movement.

In some embodiments of the present disclosure, the statistical subunit is specifically configured to:
perform statistics on the historical logs according to the collection time sub-windows to obtain log sub-statistics; and
for each window position, sum the log sub-statistics of at least two collection time sub-windows corresponding to the collection time window at the window position to obtain a log statistic.

In some embodiments of the present disclosure, the control module 303 includes: a first control unit and a second control unit.

The first control unit is configured to, when the state identification information indicates that the target log is outputtable, obtain a process blacklist to be filtered and a functional module blacklist to be filtered.

The second control unit is configured to, when the target service process is not included in the process blacklist to be filtered and the type of the target log is not included in the functional module blacklist to be filtered, send the target log to the target writing process, and write the target log into the target buffer through the target writing process.

In the embodiment of the present disclosure, the acquisition module 301 first acquires the target output level corresponding to the target service process when it is detected that the target service process has generated a target log. Then, the determination module 302 determines the state identification information of the target log according to the target output level. Next, the control module 303 sends the target log to the target writing process and writes the target log into the target buffer through the target writing process when the state identification information indicates that the target log is outputtable.

The target output level is determined according to the log statistic of the target service process. The log statistic is obtained by counting historical logs generated by the target service process according to a collection duration interval and a collection frequency, where the time interval corresponding to the collection frequency is smaller than the collection duration interval.

By determining the state identification information of the target log according to the target output level corresponding to the target service process and controlling the output of the target log to the target buffer based on the state identification information, the embodiment of the present disclosure achieves level-based management of log storage in the buffer. Compared with the related art that controls log storage based on the remaining buffer space, the embodiment of the present disclosure can not only reduce the amount of log data stored in the buffer, but also filter logs to improve the importance of logs stored in the buffer.

By collecting and counting the historical logs corresponding to the target service process according to the collection duration interval and the collection frequency, a log statistic corresponding to the target service process can be obtained, thereby facilitating dynamic adjustment of the output level of the target log based on the log statistic, improving the accuracy of the target output level, and consequently enhancing the accuracy of log output control.

Since the time interval corresponding to the collection frequency is smaller than the collection duration interval, when the log statistic is counted according to the collection duration interval and the collection frequency, overlapping portions of log content in adjacent collection duration intervals can be included, thereby enabling refined statistical analysis of historical logs and improving the accuracy of the target output level.

In addition, the present disclosure further provides an electronic device. As shown in FIG. 10, which illustrates a schematic structural diagram of the electronic device according to the present disclosure, the electronic device may specifically include a processor 401 having one or more processing cores, a memory 402 which is a computer-readable storage medium, a power supply 403, and an input unit 404.

It should be understood by those skilled in the art that the structure of the electronic device shown in FIG. 10 is not intended to limit the electronic device. The electronic device may include more or fewer components than those illustrated, combine certain components, or have a different arrangement of components.

The processor 401 serves as the control center of the electronic device. It connects various components of the electronic device through multiple interfaces and communication lines and performs overall control of the device by running or executing software programs and/or modules stored in the memory 402, as well as by accessing data stored therein. The processor 401 executes various functions and processes data to enable coordinated operation of the entire device.

Optionally, the processor 401 may include one or more processing cores. Preferably, the processor 401 may integrate an application processor and a modem processor. The application processor primarily handles tasks such as the operating system, user interface, and application programs, while the modem processor mainly handles wireless communication. It should be understood that the modem processor may alternatively be implemented separately rather than being integrated into the processor 401.

The memory 402 may be configured to store software programs and modules. The processor 401 executes various functional applications and data processing by running the software programs and modules stored in the memory 402. The memory 402 may include a program storage area and a data storage area. The program storage area may store an operating system and at least one application required for specific functions (e.g., audio playback, image display, etc.), while the data storage area may store data generated during the use of the electronic device.

Additionally, the memory 402 may include high-speed random-access memory (RAM) and non-volatile memory, such as at least one magnetic storage device, flash memory device, or other volatile or non-volatile solid-state storage devices. Accordingly, the memory 402 may further include a memory controller configured to provide the processor 401 with access to the memory 402.

The electronic device also includes a power supply 403 for supplying power to various components. Preferably, the power supply 403 may be logically connected to the processor 401 through a power management system, thereby enabling management of charging, discharging, and power consumption control functions. The power supply 403 may include one or more direct current (DC) or alternating current (AC) power sources, rechargeable systems, power log output control circuits, power converters or inverters, and power status indicators, among other components.

The electronic device may further include an input unit 404, which may be configured to receive input of numerical or character information and to generate keyboard, mouse, joystick, optical, or trackball signal inputs related to user settings and functional control.

Although not shown, the electronic device may also include a display unit and other components, which are not described in detail here. Specifically, in this embodiment, the processor 401 of the electronic device executes the following operations: it loads one or more executable files corresponding to application processes into the memory 402, and runs the applications stored in the memory 402, thereby performing the operations of any method of managing and controlling log output provided in the embodiments of the present disclosure.

In the embodiment of the present disclosure, when it is detected that a target service process has generated a target log, the system obtains the target output level corresponding to the target service process, determines the state identification information of the target log according to the target output level, and, when the state identification information indicates that the target log is outputtable, sends the target log to a target writing process and writes the target log into a target buffer through the target writing process.

The target output level is determined according to the log statistics of the target service process, where the log statistics are obtained by counting the historical logs generated by the target service process according to a collection duration interval and a collection frequency, and the time interval corresponding to the collection frequency is smaller than the collection duration interval.

By determining the state identification information of the target log according to the target output level corresponding to the target service process and controlling the output of the target log to the target buffer based on the state identification information, the embodiment of the present disclosure achieves level-based management of log storage in the buffer. Compared with the related art, which controls log storage based on the remaining buffer space, this embodiment can not only reduce the amount of log data that needs to be stored in the buffer but also filter logs to improve the importance of logs stored in the buffer.

Furthermore, by counting the historical logs corresponding to the target service process according to the collection duration interval and collection frequency, the embodiment enables dynamic adjustment of the output level of the target log based on the log statistics, thereby improving the accuracy of the target output level and enhancing the overall accuracy of log output control.

Since the time interval corresponding to the collection frequency is smaller than the collection duration interval, when the log statistics are collected according to the collection duration interval and the collection frequency, overlapping portions of log content in adjacent collection duration intervals can be captured. This enables fine-grained statistical analysis of historical logs, thereby improving the accuracy of the target output level.

The detailed implementations of the above operations can be found in the preceding embodiments and are therefore not repeated here.

It can be understood by those skilled in the art that all or part of the operations of the methods in the above embodiments may be implemented by executing instructions, or by controlling relevant hardware through instructions. These instructions may be stored on a computer-readable storage medium and loaded and executed by a processor.

Accordingly, the present disclosure further provides a computer-readable storage medium on which a computer program is stored. The computer program can be loaded and executed by a processor to perform the operations of any method of managing and controlling log output provided by the present disclosure.

The specific implementations of the above operations can be found in the preceding embodiments and are therefore not repeated here.

The computer-readable storage medium may include a Read-Only Memory (ROM), Random Access Memory (RAM), magnetic disk, or optical disk, among others.

Since the instructions stored in the computer-readable storage medium can execute the operations of any method of managing and controlling log output provided by the present disclosure, the advantageous effects achieved by such methods, as described in the foregoing embodiments, can also be realized.

The foregoing has provided a detailed description of a method of managing and controlling log output, apparatus, electronic device, and computer-readable storage medium according to the present disclosure. Specific examples have been used to illustrate the principles and embodiments of the invention. The descriptions of the above embodiments are intended to assist in understanding the concept and core ideas of the invention; however, for those skilled in the art, various modifications and adaptations in specific implementation and application scope can be made based on the spirit of the invention. Therefore, the content of this specification should not be construed as limiting the scope of the invention.

It should be further noted that, in specific implementations of the present disclosure, any data related to process execution logs or log data volume mentioned herein, when applied to actual products or technologies, must be obtained with user authorization or consent, and the collection, use, and processing of such data must comply with the relevant laws, regulations, and standards of the applicable countries or regions.

## Claims

1. A method of managing and controlling log output, comprising:
when a target log generated by a target service process is detected, obtaining a target output level corresponding to the target service process;
determining state identification information of the target log according to the target output level;
when the state identification information indicates that the target log is outputtable, sending the target log to a target writing process, and writing the target log into a target buffer through the target writing process;
wherein the target output level is determined according to a log statistic of the target service process, the log statistic being obtained by counting historical logs generated by the target service process according to a collection duration interval and a collection frequency, and a time interval corresponding to the collection frequency being smaller than the collection duration interval.

2. The method according to claim 1, wherein before obtaining the target output level corresponding to the target service process, the method further comprises:
obtaining historical logs generated by the target service process and obtaining an initial output level corresponding to the target service process;
counting the historical logs generated by the target service process according to the collection duration interval and the collection frequency to obtain at least two log statistics; and
adjusting the initial output level according to the at least two log statistics to obtain the target output level.

3. The method according to claim 2, wherein adjusting the initial output level according to the at least two log statistics to obtain the target output level comprises:
calculating a number of log statistics exceeding a statistical threshold for the at least two log statistics to obtain a reference log number; and
increasing the initial output level according to the reference log number to obtain the target output level.

4. The method according to claim 2, wherein adjusting the initial output level according to the at least two log statistics to obtain the target output level comprises:
determining a change trend of log quantity for the at least two log statistics; and
when the change trend of the log quantity indicates continuous increase, increasing the initial output level to obtain the target output level.

5. The method according to claim 2, wherein counting the historical logs generated by the target service process according to the collection duration interval and the collection frequency to obtain at least two log statistics comprises:
determining a collection time window according to the collection duration interval;
moving the collection time window according to a time interval corresponding to the collection frequency to obtain at least two window positions corresponding to the collection time window;
obtaining a window statistic of the historical logs at each window position through the collection time window; and
using the window statistic as the log statistic.

6. The method according to claim 5, wherein moving the collection time window according to the time interval corresponding to the collection frequency to obtain at least two window positions corresponding to the collection time window comprises:
generating at least two collection time sub-windows corresponding to the historical logs according to the time interval corresponding to the collection frequency, wherein the collection time window is formed by at least two adjacent collection time sub-windows;
moving the collection time window by a width of one collection time sub-window; and
obtaining the window position based on positions of the collection time window before and after the movement.

7. The method according to claim 5, wherein obtaining the log statistic of the historical logs at each window position through the collection time window comprises:
counting the historical logs according to the collection time sub-window to obtain a log sub-statistic; and
for each window position, performing summation processing on the log sub-statistics of at least two collection time sub-windows corresponding to the collection time window at the window position to obtain the log statistic.

8. The method of managing and controlling log output according to any one of claims 1-7, wherein when the state identification information indicates that the target log is outputtable, sending the target log to the target writing process, and writing the target log into the target buffer through the target writing process comprises:
when the state identification information indicates that the target log is outputtable, obtaining a process blacklist to be filtered and a function module blacklist to be filtered;
when the target service process is not in the process blacklist to be filtered and a type of the target log is also not in the function module blacklist to be filtered, sending the target log to the target writing process, and writing the target log into the target buffer through the target writing process.

9. The method according to claim 7, wherein after sending the target log to the target writing process and writing the target log into the target buffer through the target writing process when the state identification information indicates that the target log is outputtable, the method further comprises:
obtaining a first time starting point of the collection time window when the target output level is determined, wherein a time ending point of the collection time window at this time is a moment when the target log is detected;
determining a target time starting point according to a movement operation and the first time starting point;
using the target time starting point as a new starting point of the collection time window to collect the historical logs to obtain a new log statistic;
when the log statistic exceeds the statistical threshold, increasing a current dynamically adjusted target output level to obtain another output level; and
performing output control on a next target log generated based on the another output level.

10. The method according to claim 1, wherein determining the state identification information of the target log according to the target output level comprises:
determining an actual output level according to an attribute of the target service process;
when the actual output level of the target service process is higher than or equal to the target output level, setting outputtable as the state identification information corresponding to the target log; and
when the actual output level of the target service process is lower than the target output level, setting non-outputtable as the state identification information corresponding to the target log.

11. The method according to claim 6, wherein moving the collection time window by the width of one collection time sub-window comprises:
the collection time window being composed of multiple collection time sub-windows;
taking a collection time sub-window located at a rightmost side as a first window and taking a collection time sub-window located at a leftmost side as a second window;
adding one collection time sub-window on a right side of the first window and deleting the second window to obtain a collection time window at a new position, so as to realize movement of the collection time window.

12. The method according to claim 1, wherein the log statistic comprises a statistic of a log line number and a statistic of a log byte number.

13. The method according to claim 1, wherein the target log is a log generated by the target service process after running, and the target service process comprises at least one of an application process or a system process.

14. A log output control device, comprising:
a obtaining module configured to, when a target log generated by a target service process is detected, obtain a target output level corresponding to the target service process;
a determining module configured to determine state identification information of the target log according to the target output level;
a controlling module configured to, when the state identification information indicates that the target log is outputtable, send the target log to a target writing process, and write the target log into a target buffer through the target writing process;
wherein the target output level is determined according to a log statistic of the target service process, the log statistic being obtained by counting historical logs generated by the target service process according to a collection duration interval and a collection frequency, and a time interval corresponding to the collection frequency being smaller than the collection duration interval.

15. The log output control device according to claim 14, wherein the log output control device comprises an adjusting module comprising:
an obtaining unit configured to obtain historical logs generated by the target service process and obtain an initial output level corresponding to the target service process;
a counting unit configured to count the historical logs generated by the target service process according to a collection duration interval and a collection frequency to obtain at least two log statistics; and
an adjusting unit configured to adjust the initial output level according to the at least two log statistics to obtain the target output level.

16. The log output control device according to claim 15, wherein the adjusting unit comprises:
a calculating subunit configured to, for the at least two log statistics, count a number of log statistics exceeding a statistical threshold to obtain a reference log number; and
a first adjusting subunit configured to increase the initial output level according to the reference log number to obtain the target output level.

17. The log output control device according to claim 15, wherein the adjusting unit comprises:
a determining subunit configured to determine a change trend of log quantity for the at least two log statistics; and
a second adjusting subunit configured to, when the change trend of the log quantity indicates continuous increase, increase the initial output level to obtain the target output level.

18. The log output control device according to claim 15, wherein the counting unit comprises:
a first determining subunit configured to determine a collection time window according to a collection duration interval;
a moving subunit configured to move the collection time window according to a time interval corresponding to a collection frequency to obtain at least two window positions corresponding to the collection time window;
a counting subunit configured to obtain a window statistic of historical logs at each window position through the collection time window; and
a second determining subunit configured to use the window statistic as the log statistic.

19. An electronic device, comprising a memory, a processor, and computer program stored in the memory and executable by the processor to implement the method of managing and controlling log output as claimed in any one of claims 1-13.

20. A computer-readable storage medium storing computer program executable by a processor to implement the method of managing and controlling log output as claimed in any one of claims 1-13.
